# EUROPEAN PATENT SPECIFICATION

(11) **EP 3 239 706 B1**
(45) Date of publication and mention of the grant of the patent: **13.04.2022**
(21) Application number: 17168746.0
(22) Date of filing: 28.04.2017
(51) Int. Cl.: G01N 29/04, G01N 29/11, G01N 29/26, G01N 29/265

(54) **APPARATUS AND METHOD FOR INSPECTING AN OBJECT USING ULTRASONIC WAVES IN THE FIELD OF MATERIAL TESTING**
VORRICHTUNG UND VERFAHREN ZUR INSPEKTION EINES OBJEKTS MIT ULTRASCHALLWELLEN IM BEREICH DER MATERIALPRÜFUNG
APPAREIL ET PROCÉDÉ POUR INSPECTER UN OBJET AU MOYEN D'ONDES ULTRASONORES DANS LE DOMAINE DE TEST DE MATÉRIAUX

(30) Priority: 29.04.2016 EP 16167716
(43) Date of publication of application: 01.11.2017
(73) Proprietor: Fraunhofer-Gesellschaft zur Förderung der angewandten Forschung e.V., 80686 München (DE)
(72) Inventor: Osman, Ahmad, 66121 Saarbrücken (DE); Valeske, Bernd, 66802 Überherrn (DE); HANKE, Randolf, 90617 Puschendorf (DE); Bähr, Werner, 66271 Kleinblittersdorf (DE); GEMMEKE, Hartmut, 76297 Stutensee (DE); RUITER, Nicole, 76448 Durmersheim (DE); ZAPF, Michael, 76149 Karlsruhe (DE); HOPP, Torsten, 67346 Speyer (DE)
(74) Representative: Hersina, Günter

(56) References cited:
- EP-A1- 2 105 737
- US-A1- 2003 177 833
- US-A1- 2005 209 791
- US-A1- 2009 178 484
- US-A1- 2010 064 811
- US-A1- 2012 036 934
- US-B1- 6 347 551

## Description

The present invention relates to an apparatus for inspecting an object. Further, the invention refers to a method for inspecting an object.

First publications in the field of ultrasound computed tomography (USCT) date back to the late 1970s. Since then several scientists have been working on ultrasound tomography achieving some impressive results, see e.g. [1] to [5]. Notably, the studies were done for usage in medical application (see [6] to [12]), such as breast diagnosis, [12]. The advance and knowledge gained within the medical applications should help and provide the way to apply USCT also in industrial applications. For example, the use of Pulse/Echo for industrial non-destructive testing is discussed in [13]. An aperture optimization for a medical application is given in EP 2 056 124 A1.

Non-destructive testing (NDT) of complex shapes with ultrasound waves is a complicated task and is still currently an open problem. The standard methods up to now are mainly Pulse/Echo, transmission, time-of-flight diffraction or tandem based. None of these methods offers a satisfactory solution to scan complex shapes as they, for instance in case of Pulse/Echo, either require a direct contact with the scanned object or a complicated manipulation technique to place the ultrasound transducers at adequate spatial location - e.g. parallel to the surface to be scanned - for each scanning.

US 2010/0064811 A1 relates to a method and a device for an imaging ultrasonic inspection of a three-dimensional workpiece, in which ultrasonic waves are coupled into the workpiece with at least one ultrasonic transducer and ultrasonic waves reflected within the workpiece are received by ultrasonic transducers and converted into ultrasonic signals forming the basis of the non-destructive imaging ultrasonic inspection.

US 2009/0178484 A1 relates to a method for a non-destructive inspection of a test body using ultrasound, in which at least one ultrasonic transducer couples ultrasonic waves into the test body and ultrasonic waves reflected inside the test body are received by ultrasonic transducers and converted into ultrasonic signals, which form the basis of the non-destructive inspection.

US 2005/0209791 A1 relates to a manufacturing process or in service defects acoustic imaging using a sensor array. A mobile platform is provided which has at least one component having an array of distributed piezoelectric transmitters and an associated array of distributed receivers. The receivers are configured to receive ultrasonic transmissions from the transmitters. Data from the receivers is stored in memory and processed through an algebraic reconstruction tomography algorithm which forms an image of the defect within the component. An algorithm is used to determine the position and size of the defect.

US 2003/0177833 A1 relates to ultrasonic multi-element transducers and methods for non-destructive testing. The transducer elements are driven sequentially and/or in different combinations, and the signals received from each transducer element are multiplexed. At least one such transducer may be mounted on a rotary tester for testing manufactured objects such as tubes and bars.

EP 2 105 737 A1 relates to a system for ultrasonically detecting effects in pipe walls. The System comprises ultrasonic transducer means which are arranged for emitting, via an exit opening, ultrasonic signals from the interior of the pipe towards its wall and for receiving, via an entrance opening, backscattered signals from its wall. The transducer means are arranged to emit and receive a multitude of signals having their main directions within a plane mainly perpendicular to the pipe axis. The diameter of said exit and/or entrance opening of the transducer means mainly has the magnitude of the wavelength of the used ultrasonic signals. The complex of emitted and backscattered signals are processed, in processing means.

US 2012/0036934 A1 relates to a method using ultrasound for a non-destructive examination of a test body by means of ultrasound, whereby ultrasound waves are injected into the test body by means of one or more ultrasound transducers and ultrasound waves reflected inside the test body are received by a plurality of ultrasound transducers and are converted to ultrasound signals. The ultrasound signals are detected in individual measurement intervals and are stored individually and are accessible to offline evaluation after termination of the measurements.

US 6 347 551 B1 relates an ultrasonic computed tomography tree scanner comprising a plurality of ultrasonic transceivers arranged on a belt sized to encircle a tree. An ultrasonic wave is launched from a single transceiver acting as a transmitter and the ultrasonic wave is detected by transceivers that act as receivers and that are arrange around the transmitter. A transceiver controller steps through each of the transceivers, activating each successive one to be the transmitter.

Thus, an object of the invention is to provide an apparatus and a method for inspecting a measuring object even with a complex shape using ultrasound waves.

The object is achieved by an apparatus according to claim 1 and by a method according to claim 14. The apparatus and the method are used in the field of material testing and, thus, not for a medical purpose.

The invention provides an inspection apparatus and a corresponding method with a measuring object enclosing aperture for three dimensional ultrasound computed tomography.

The apparatus for inspecting an object comprises an emitter configured for emitting ultrasound waves towards a measuring area and a receiver configured for receiving ultrasound waves from the measuring area. The object or measuring object is usually located for the measurement at least partially within the measuring area. Further, the emitter is configured to emit ultrasound waves from different positions relative to the measuring area. Additionally or alternatively, the receiver is configured to receive ultrasound waves at different positions relative to the measuring area.

The emitter emits ultrasound waves from different positions towards the measuring area and, thus, towards the (measuring) object. As the interaction between the ultrasound waves and the measuring object depends at least on the relative position between the object and the source of the ultrasonic waves, different effects and different kinds of interaction can be used. Further, it is possible to obtain measuring data for different sides of the measuring object. tThe receiver receives ultrasound waves at different positions. Receiving the waves at different positions allows to increase information about the measuring object.

In one example, the emitter is configured to emit unfocussed ultrasound waves towards the measuring area. In the example, no focusing of the ultrasound waves towards the measuring object or towards a region of the measuring object is performed.

In one embodiment, the emitter is configured to emit ultrasound waves at different times from different positions relative to the measuring area. In this embodiment, the emitter emits ultrasound waves at different times or points of time from different positions relative to the measuring area. The measuring object is exposed to the ultrasound waves stemming consecutively from different positons of their source. In one embodiment, each position of emission is associated with a different time.

In one embodiment, the emitter is configured to emit ultrasound waves at different times from different positions relative to the measuring area according to specific focal laws, in order to generate waves that are focused and/or steered to scan positions at specific depths and orientations within the object. In such case, the apparatus works in a phased array modus but can nevertheless still measure all kinds of interactions of the ultrasonic waves with the object. In the current state of art, only reflected waves are measured in such a phased array modus.

In a further embodiment, the emitter is configured to emit ultrasound waves at different times triggered by a given scheme. The scheme is chosen to allow an optimal examination of the measuring object and/or to provide answers for the specific questions to be answered by the examination, for example, whether cracks or imperfections are present in the object.

According to an embodiment, the emitter is configured to emit ultrasound waves simultaneously from different positions relative to the measuring area. In this embodiment, the emitter emits at one point of time ultrasound waves towards the measuring object from different positions. The simultaneous emission either allows measuring different sides of the measuring object at one time and/or allows to cause interference effects of the emitted ultrasound waves. For enabling the simultaneous emission of ultrasound waves, the emitter comprises in an embodiment a plurality of ultrasound transducers serving as emitter units which are located at different positions around the measuring area.

In an embodiment, the emitter is configured to emit ultrasound waves at different times from different positions relative to the measuring area according to a specific focal law. The focal law, for example, refers to a phased array.

In a further embodiment, the emitter is configured to emit ultrasound waves to the measuring area and the receiver is configured to receive at a specific position reflected and diffracted ultrasound waves. In this embodiment, a Time-of-Flight-diffraction mode is realized.

In an embodiment, the receiver is configured to receive ultrasound waves at different times at different positions relative to the measuring area. In the embodiment, the receiver receives ultrasound waves successively at different positions and thus at different angles relative to the measuring object. In one embodiment, receiving the ultrasound waves at different times is combined and matched with the emission of ultrasound waves at different times. In another embodiment, the emitter emits at different times ultrasound waves from one position and the receiver receives at the different times ultrasound waves at different positions.

According to an embodiment, the receiver is configured to receive ultrasound waves simultaneously at different positions relative to the measuring area. In this embodiment, the emission of ultrasound waves by the emitter is followed by receiving simultaneously ultrasound waves at different positions relative to the measuring area.

According to a further embodiment, the apparatus triggers the receiver - for example by triggering individual receiver units or groups of receiver units - to receive ultrasound waves at specific positions. In one embodiment, this is done depending on the positions from which the ultrasound waves are emitted.

In one embodiment, the emitter comprises at least one emitter unit - or a group of emitter units - and a emitter moving unit. Further, the emitter moving unit is configured to move the emitter unit relative to the measuring area. In one embodiment, the emitter moving unit is a ring rotatable around the measuring area. In a different or supplemental embodiment, the emitter moving unit allows a vertical movement of the emitter unit along e.g. a longitudinal axis of the measuring area in order to emit ultrasound waves at different layers of the measuring object. The emitter unit is in one embodiment an ultrasound transducer comprising one or more piezoelectric element(s).

According to an embodiment, the emitter moving unit is configured to move the emitter unit around the measuring area at one height or at different heights along a longitudinal axis of the measuring area. In one embodiment, the emitter unit is moved around the measuring area at one height along a longitudinal axis of the measuring area. In a different or supplemental embodiment, the emitter unit is moved along the longitudinal axis and, thus, along the vertical extension of the measuring object. The movement along the longitudinal axis is in one embodiment perpendicular to the layer in which the emitter and the receiver are located.

The emitter comprises a plurality of emitter units. The emitter units of the plurality of emitter units are arranged relative to the measuring area. Various emitter units are comprised by the emitter and are used for emitting ultrasound waves. The emitter units are preferably located at different positions around the measuring area allowing to emit ultrasound waves from these positions.

According to an embodiment, at least some emitter units of the plurality of emitter units are arranged at one height or at different heights along a longitudinal axis of the measuring area. In one embodiment, at least some emitter units are located at the same height along the longitudinal axis of the measuring area. They are preferably located around the measuring area at this height, thus, allowing to emit at this height ultrasound waves at different sides of the measuring object. In a different or supplemental embodiment, at least some emitter units are located at different heights and thus at different layers along the vertical extension of the measuring object. In one embodiment, all emitter units are evenly distributed around the measuring area.

In an example, the receiver comprises at least one receiver unit - or a group of receiver units - and a receiver moving unit, and wherein the receiver moving unit is configured to move the receiver unit relative to the measuring area. In this embodiment, at least one receiver unit is comprised by the receiver and is moved by a receiver moving unit relative to the measuring area. In one embodiment, the receiver moving unit is a ring allowing a rotation of the receiver unit around the measuring area and e.g. also along a longitudinal axis of the measuring area.

In one embodiment, the receiver units of the plurality of receiver units are randomly arranged relative to the emitter. They are preferable also randomly arranged relative to the measuring area and the enclosing aperture, respectively. It was found that the random distribution provides a reduced noise and, thus, an increased signal to noise ratio of the received and combined, e.g. added, ultrasound waves. This is especially in the case in which the signals received by the receiver and by the individual receiver units are jointly evaluated.

By increasing the number of positions at which the ultrasound waves are received, the number of overlapping areas increases leading to redundancy of data and information about the measuring object.

The emitter comprises a plurality of emitter units and the receiver comprises a plurality of receiver units. The emitter units and the receiver units are arranged relative to the measuring area according to a specific geometrical pattern. The pattern formed by the different receiver and emitter units is in one embodiment, circular or rectangular or cubical or cylindrical or semispherical. Other patterns are also possible. The geometrical pattern describes the form resulting from arranging the respective transducers around the measuring area.

In one embodiment, the receiver units receive mainly specific kinds of ultrasound wave following the interaction with the measuring object depending on their positions relative to the emitter and to the object. Hence, some receiver units of the plurality of receiver units receive transmitted ultrasound waves, some other receiver units of the plurality of receiver units receive reflected ultrasound waves and a third part of receiver units of the plurality of receiver units receives diffracted ultrasound waves. In one embodiment, some receiver units receive more than just one kind of ultrasound waves.

From the angle between the position of the emitted waves and the position of the received waves, in one embodiment, it is determined whether the received waves are mainly transmitted or reflected waves, for example.

In one example, the emitter moving unit and the receiver moving unit are realized by one moving unit configured for moving at least one emitter unit and at least one receiver unit.

The receiver moving unit in an example is configured to move the receiver unit around the measuring area at one height or at different heights along a longitudinal axis of the measuring area. The receiver moving unit moves in one embodiment the receiver unit around the measuring area keeping the receiver unit at one height along a longitudinal axis of the measuring unit. In a different or supplemental embodiment, the receiver unit is moved by the receiver moving unit along the longitudinal axis, thus, allowing the receiver unit to receive ultrasound waves at different positions along the vertical extension of the measuring object.

The receiver comprises a plurality of receiver units and the receiver units of the plurality of receiver units are arranged relative to the measuring area. In an embodiment, the receiver receives ultrasound waves by using various receiver units which are arranged around the measuring area. In one embodiment, the receiver units are randomly and/or evenly distributed around the measuring area.

The different locations of the receiver units allow to receive ultrasound waves at different positions and, thus, gathering different information about the measuring object and its interaction with the ultrasound waves emitted by the emitter of the apparatus.

In an embodiment, at least some receiver units of the plurality of receiver units are arranged at one height or at different heights along a longitudinal axis of the measuring area. In one embodiment, at least some receiver units surround the measuring area at one height along the longitudinal axis of the measuring area. In a different or supplemental embodiment, at least some receiver units are arranged along the longitudinal axis at different heights, thus, allowing to receive ultrasound waves at different layers of the measuring area.

In one embodiment, at least one emitter unit serves only as an emitter unit and is designed, thus, only to emit ultrasound waves and not to receive them. In another embodiment, at least one receiver unit serves only as a receiver unit and does not emit ultrasound waves. This refers, for example, to the electronic controlling or triggering the respective transducer.

According to an embodiment, the apparatus comprises at least one transducer serving as emitter unit and as receiver unit. In a corresponding embodiment, all emitter units and all receiver units of the apparatus are realized by transducers that allow to emit and to receive ultrasound waves. The at least one transducer is used in turn as a emitter unit and as a receiver unit. In one embodiment, the transducer comprises at least one piezoelectric element.

The receiver in an embodiment is configured to receive transmitted and/or reflected and/or diffracted ultrasound waves. The receiver - or the at least one receiving unit - allows to receive transmitted ultrasound waves and/or reflected ultrasound waves and/or diffracted ultrasound waves. The different kinds of interaction between the ultrasound waves emitted by the emitter and the measuring object cause different ultrasound waves that are received by the receiver. The subsequent evaluation of the ultrasound waves gathers the information about the measuring object carried by the ultrasound waves.

The following embodiments refer to the geometry of the measuring area. This geometry is in one embodiment defined by a container or aperture housing at least a part of the measuring object for the measuring by the apparatus.

According to an embodiment, the measuring area has at least at one height along a longitudinal axis a circular circumference.

In one embodiment, the measuring area has at least partially a cylindrical outer contour. In an alternative or supplemental embodiment, the measuring area has at least partially an outer contour of a spheroid.

According to an embodiment, the emitter units and the receiver units are such formed and arranged that the emitter units and the receiver units are spatially separated from the measuring area. In this embodiment, a direct contact between the measuring object and the emitter units and the receiver units - or the transducers according to a foregoing embodiment - is avoided.

The apparatus comprises an evaluator. The evaluator is configured to evaluate a damping or attenuation of ultrasound waves due to an interaction with the object. In one embodiment, the values are evaluated for individual volume elements (or pixels) of the measuring object.

The evaluator is configured to receive and evaluate signals from the receiver. The respective signals from the receiver are based on transmitted ultrasound waves received by the receiver. In one embodiment, the receiver provides electronic, e.g. digital signals for the received ultrasound or ultrasonic waves.

In a further embodiment, the evaluator is configured to handle the case of missing transmitted ultrasound waves. In some cases - for example with specific measuring objects or due to the presence of air - it can happen that ultrasound waves are completely reflected, so that none are almost none transmitted ultrasound wave can be received from at least one area of the measuring object or the measuring area. The evaluator is, therefore, configured for dealing with such a situation. The evaluator takes in one embodiment care of missing signals by evaluating ultrasound waves received with different emitter positions and, thus, with different angles to the respective area of the measuring object. Hence, the evaluator profits from the overlap of information due to emitting waves from different positons relative to the measuring object and due to receiving many waves at different positions.

The apparatus comprises an evaluator, and the evaluator is configured to receive and evaluate signals from the receiver. In an embodiment, the signals from the receiver are based on reflected and/or diffracted ultrasound waves received by the receiver. The evaluator uses for example the Pulse/Echo method for gathering information about the measuring object.

In an embodiment, the evaluator is configured to combine results obtained by evaluating signals based on transmitted ultrasound waves and by evaluating signals based on reflected and diffracted ultrasound waves. The evaluator evaluates the different kinds of received ultrasound waves and combines the results for obtaining information about the measuring object, e.g. its shape and/or its composition. The combination is, for example, done by fusing images achieved by the evaluation of the different kinds of ultrasound waves.

The apparatus comprises an evaluator, wherein the evaluator is configured to receive and evaluate signals from the receiver. In an embodiment, the receiver converts in one embodiment the received ultrasound waves into electrical signals that are fed to the evaluator. The evaluator extracts in one embodiment data from the received signals and combines the data in order to obtain information about the shape of the measuring object and/or about characteristics of the measuring object concerning ultrasound waves. In one embodiment, the evaluator is configured to reconstruct ultrasonic waves based on the signals received from the receiver. In an additional embodiment, the evaluator is configured to visualize a reconstructed image or a reconstructed volume of the measuring object based on the reconstructed ultrasonic waves.

In another embodiment, the evaluator is configured to reconstruct transmitted ultrasonic waves from the received signals.

In a following embodiment, the evaluator is configured to visualize a reconstructed image or a reconstructed volume of the measuring object based on the reconstructed transmitted ultrasonic waves.

In a different embodiment, the evaluator is configured to reconstruct reflected and diffracted ultrasonic waves from the received signals. This refers to the Pule/Echo method. According to a depending embodiment, the evaluator is configured to visualize a reconstructed image or a reconstructed volume of the measuring object based on the reconstructed reflected and diffracted ultrasonic waves.

The following embodiment combines some of the foregoing embodiments. In this embodiment, the evaluator is configured to fuse, to register, to overlay and to merge on the one hand a reconstructed image or a reconstructed volume of the measuring object based on the reconstructed transmitted ultrasonic waves and on the other hand a reconstructed image or a reconstructed volume of the measuring object based on the reconstructed reflected and diffracted ultrasonic waves and wherein the evaluator is configured to visualize the result as one image or one volume.

According to an embodiment, the apparatus comprises a coupling medium within the measuring area and surrounding the object. In one embodiment, the coupling medium is for example water.

The apparatus comprises an evaluator. The evaluator is configured to receive and evaluate signals from the receiver. In an embodiment, the evaluator is configured to provide at least one value for a speed of sound of ultrasonic waves within the object. In this embodiment, the evaluator calculates the speed of sound of the ultrasonic waves while travelling through the measuring object.

In an embodiment, the evaluator takes care of the fact that the ultrasonic waves pass also through a coupling medium surrounding the object. Hence, a kind of mean or average speed of sound is calculated. For the calculation of the speed of sound and, especially, for the calculation of a distribution of different values of the speed of sound within the object, the starting location of the emitted waves and the receiving point of the waves is taken into account. Also the transit time of the waves, i.e. the time between emission and receiving, is considered. In a further embodiment, the density of the object or a density distribution within the object and/or the density of the surround coupling medium is used for the calculation of the speed of sound and subsequent calculations, e.g. concerning the dimensions of the object.

The evaluator in an embodiment is configured to provide a distribution of values of the speed of sound of ultrasonic waves within the object. The trajectories between the locations of the emission of the ultrasound waves and the locations of receiving them are used to calculate a distribution of the speed of sounds within the object. Such a distribution - leading in one embodiment to a corresponding map - can be the result of an inhomogeneity within the object or its specific geometry.

In one embodiment, the evaluator uses transmitted ultrasonic waves for the calculation of the speed of sound, i.e. the evaluator is configured to provide values of the speed of sound based on transmitted ultrasonic waves.

For the calculation of the speed of sound or its distribution within the object, the redundancy due to the plurality of received waves it taken into account in one embodiment.

The apparatus comprises an evaluator being configured to receive and evaluate signals from the receiver. In an further embodiment, the evaluator is configured to reconstruct reflected ultrasonic waves based on the signals received from the receiver. The evaluator is preferably configured to visualize a reconstructed image or a reconstructed volume of the measuring object based on the reconstructed reflected ultrasonic waves.

The apparatus comprises an evaluator. The evaluator is configured to receive and evaluate signals from the receiver. In an embodiment, the evaluator is configured to reconstruct transmitted ultrasonic waves based on the signals received from the receiver. Also, the evaluator preferably is configured to visualize a reconstructed image or a reconstructed volume of the measuring object based on the reconstructed transmitted ultrasonic waves.

The two foregoing embodiments are combined in an embodiment, according to which the evaluator is configured to visualize a combination of the reconstructed image or the reconstructed volume of the measuring object based on the reconstructed reflected ultrasonic waves with the reconstructed image or the reconstructed volume of the measuring object based on the reconstructed transmitted ultrasonic waves. The combination of the results of the different evaluations are, for example, done by an overlay or a registration.

The method for inspecting an object is defined in claim 14.

The above discussed embodiments and features of the apparatus can also be realized via the method.

The invention will be explained in the following with regard to the accompanying drawings and the embodiments depicted in the accompanying drawings, in which shows:
- Fig.1: a sectional drawing of the apparatus and a signal received by a receiver unit of the apparatus,
- Fig. 2: a sectional drawing of the apparatus according to a different design,
- Fig. 3: a three-dimensional drawing of a measuring area with elements of an apparatus according to another design and
- Fig. 4: a three-dimensional drawing of a different measuring area according to another possible design.

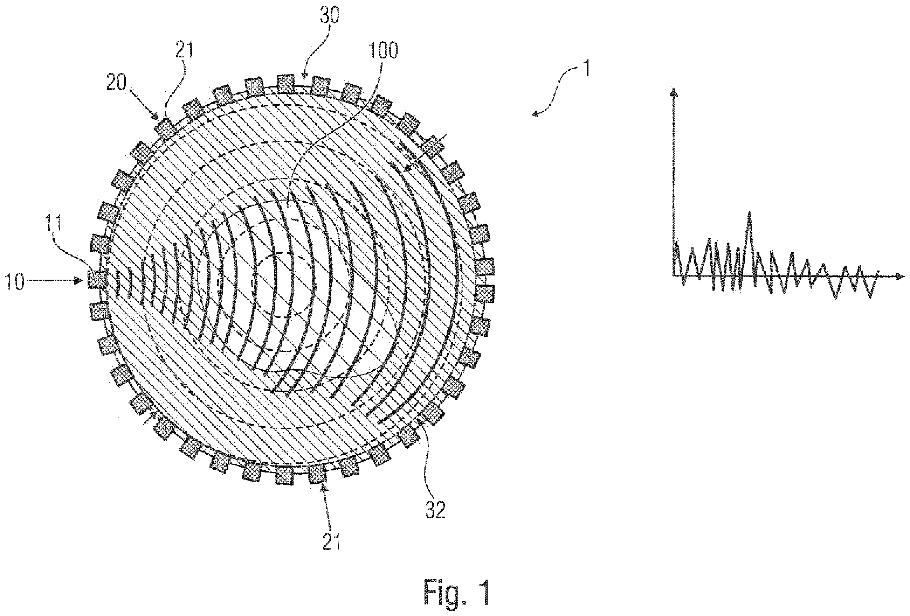

Fig. 1 shows an apparatus 1 with a plurality of transducers which serve as emitter units 11 and receiver units 21 and allow to emit and to receive ultrasound waves (i.e. sound waves with usually a frequency high than 16 kHz), respectively. The transducers are configured to emit as well as to receive ultrasound waves and do so alternately. The transducers are arranged in a ring around the circular measuring area 30. This embodiment with a ring aperture and elevation focusing allows to obtain two-dimensional data about the measuring object 100 and out-of-plane scattering data in case of wave based reconstruction.

In the shown embodiment, the transducer on the left works as a emitter unit 11 comprised by the emitter 10 of the apparatus 1 and emits a spherical or more cylindrical shape of wave front depending on the chosen shape of the used transducer. The other transducers work as receiver units 21 of the receiver 20 of the apparatus 1 and receive ultrasound waves.

For a following measurement or measurement step, a different transducer serves as an emitter units 11 and emits ultrasound waves. In such a following step, the transducer on the left of Fig. 1 serves e.g. as a receiver unit together with the other transducers.

Hence, for each wave emission by the transducer working as emitter unit 11, at least some or all transducers serve as receiver units 21 receiving the ultrasonic waves after the interaction with the measuring object 100.

Sequentially, each transducer emits a spherical or more cylindrical shape of wave front depending on the chosen shape of transducer, until the object 100 is illuminated by ultrasound from all directions. In another embodiment, just a limited illumination between 0° and 180° relative to a set reference point is achieved.

The emitted ultrasound waves pass through the coupling medium 32 and interact with the measuring object or specimen 100 within the measuring area 30. It can be seen that the object 100 has an uneven shape of which here just a slice is shown.

The interaction with the object 100 leads to transmitted, reflected and/or diffracted ultrasound waves which are in the shown embodiment all received by the receiver units 21 of the receiver 20. Thus, for each wave emission, all transducers receive as receiver units 21 the transmitted, scattered and reflected signals. The recorded signals yield a high level of overlapping information, which can be utilized for better SNR.

A signal received by a receiver unit 21 is shown on the right with the amplitude on the y-axis and the time on the x-axis. This signal encodes object information about internal structures and physical properties as, for example, speed of sound or attenuation.

It has been found that in comparison with images of conventional ultrasound, the quality of the reflection images is significantly enhanced, the reflection images show subwavelength resolution and the speckle noise is reduced to the level of the background noise of the image.

The described system is capable to work in Pulse/Echo mode where only the reflected waves are considered, as well as in transmission mode or processing all interacting waves. Depending on the inspection case, an individual mode can be selected (for example pipes inspection via Pulse/Echo) or as a full CT system considering all reflected, diffracted and transmitted waves (for example to scan steel plates).

In the embodiment shown in Fig. 1 the transducers surround the measuring area 30 at one height along a longitudinal axis (here perpendicular to the drawing plain) and serve one by one as a emitter unit 11.

The apparatus 1 provides an ultrasonic inspection system with a measuring object 100 enclosing aperture that allows a contactless scan of measuring objects 100. This is especially independent of the geometrical form of the measuring object 100. This is achieved by scanning the measuring objects 100 via in one embodiment an enclosing aperture system (this is a three-dimensional embodiment) or in a different embodiment by an enclosing structure, e.g. ring, that allows to scan stepwise the measuring object at different positions along the vertical extension of the measuring object 100 (this is the elevation focusing for two-dimensional cases).

Measured are various - preferably all - interactions of the emitted ultrasound waves with the measuring object 100 by acquiring - preferably simultaneous - the reflected, the scattered and the transmitted waves around the measuring object 100. This information is used either simultaneously or separately to provide three-dimensional tomographic image reconstructions of the scanned object 100 by various imaging algorithms. The apparatus 1 can be moved to scan the measuring object 100 from height to height. The movement in height direction, e.g. along a vertical axis, happens in one embodiment incrementally and is covering in a different embodiment a helical trajectory.

The described invention has the potential to deliver volumetric reconstructions of complex structures and to provide reliable images for robust quantitative analysis of production flaws and the deviation characterization of real structures against design specifications which, in turn, will enable optimizing the production quality.

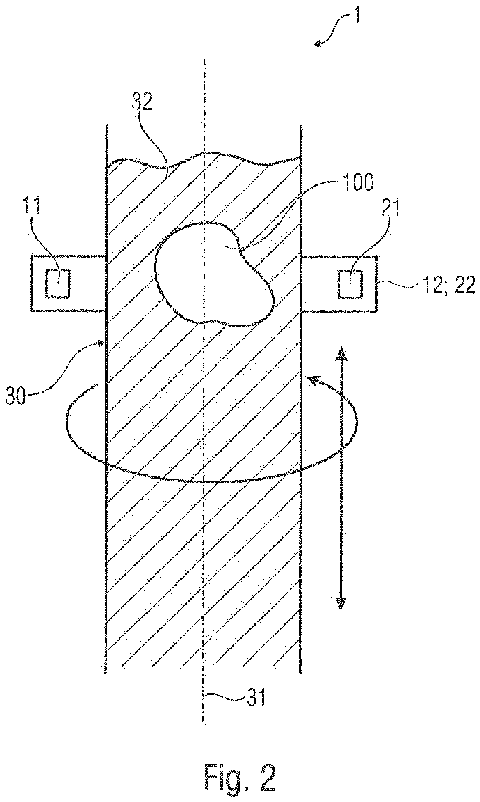

Fig. 2 shows an apparatus 1 with a cylindrical measuring area 30 or aperture having a circular base. The object 100 is immersed in a coupling medium 32 and is surrounded by a emitter unit 11 and a receiver unit 21. Both units 11, 21 are well separated from the measuring object 100 and are supported by a combined emitter/receiver moving unit 12, 22.

The combined emitter/receiver moving unit 12, 22 has the form of a ring and allows two different movements in the shown embodiment (indicated by the two arrows) not according to the apparatus of claim 1. There is one circular movement of the emitter unit 11 and the receiver unit 21 around the measuring area 30 at one height along the longitudinal axis 31 of the measuring area 32 (or the enclosing aperture). The other movement is along the longitudinal axis 31, i.e. from height to height.

At each height along the longitudinal axis 31 various measurements are performed leading to two-dimensional images of the respective slice of the object 100. In the shown embodiment, the emitter unit 11 is moved by the emitter/receiver moving unit 12, 22 in order to emit the ultrasound waves from different positions. The measurements at the different heights allow to provide a three-dimensional image of the object 100.

The invention provides an inspection system that can produce 3D ultrasound tomography images. The invention can serve either as a complementary or as an alternative to standard X-ray computer tomography for certain scenarios. The advantages provided by ultrasound technique are:
- The non-ionizing character of ultrasound unlike X-ray tubes which need expensive radiation protection.
- The unfocussed three-dimensional ultrasound computer tomography reduces the transferred energy even more in comparison to phased array sonography.
- The high sensitivity of ultrasound waves to most types of defects occurring with material and components such as cracks, delamination or porosities.
- The high information content of the received or measured signals allow to create multimodal imaging and to acquire important details about e.g. defects including their types, sizes, and locations.
- Even quantitative information as e.g. sound speed or attenuation by the measuring object can be obtained.

The receiver 20 of the apparatus 1 is in one embodiment able to register as much as possible interacting waves with the inspected object 100 from different directions. This is done via an enclosing aperture 30 having a geometrical form that allows registering many interacting waves with the measuring object (also called inspected object, object or specimen). The received waves are reflected, diffracted and transmitted waves.

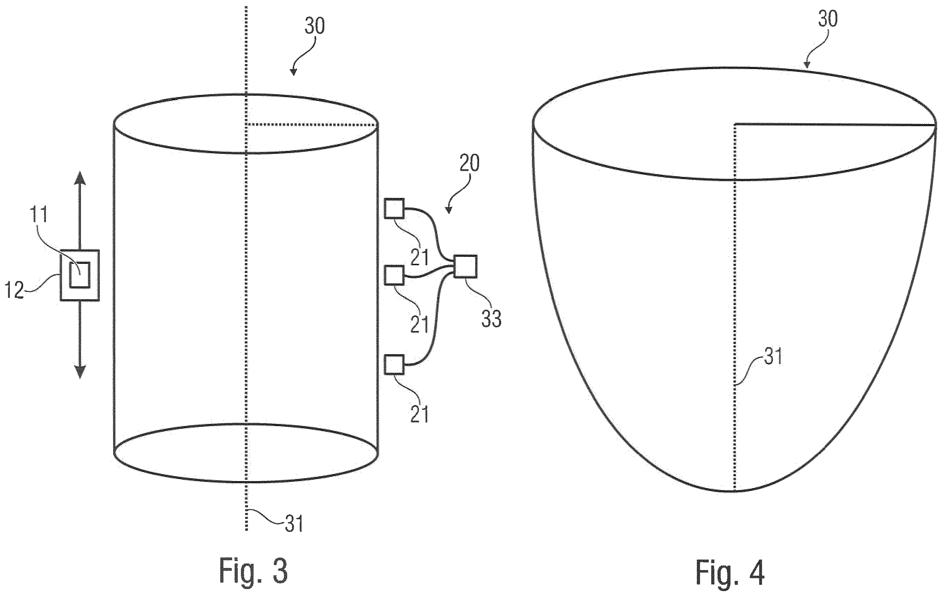

The geometry of the aperture and accordingly of the measuring area is for example:
- a two-dimensional circular or ring aperture with elevation focusing as shown in Fig. 1,
- a cylindrical aperture as shown in Fig. 2 and Fig. 3,
- a hemi-spherical aperture as shown in Fig. 4.

The advantages and properties of the invention are for example:
- The system provides a full three-dimensional representation of planar objects and of objects with a complex geometry.
- Imaging of the interior structures of the objects as well as imaging the surface of the object in high resolution in 3D volumes (application for example to detect surface and near surface defects such as porosities and cracks).
- All registered information can be used separately: system can work in pulse-echo mode, in transmission mode as well as in Tandem Mode.
- Contactless imaging possible, speed of sound corrections possible, short scanning times.
- Full scan / illuminations of many directions instead of side-view approaching spatial invariant image quality.
- Speckle noise highly reduced (compounding).
- Mode conversion, etc., has to be included, all information of wave interaction can be used to reconstruct details of the inner and outer structures of the objects.
- Application specific parameterization of the aperture, e.g. only pulse-echo, only transmission or both ("tandem").
- Specific geometrical aperture that surrounds/encloses and is optimized for the scan object.

Fig. 3 shows a measuring area 30 having a cylindrical outer surface with a radius r and a longitudinal axis 31. The measuring area 30 is e.g. defined by a container surrounding the measuring area 30. The measuring area 30 is large enough so that the objects to be measured have no contact with the transducers.

The ultrasound transducers serving as receiver units 21 are randomly and/or evenly distributed at the outside of the measuring area 30. Here, the receiver units 21 comprised by the receiver 20 are arranged at different heights along the longitudinal axis 31 of the aperture enclosing the measuring area 30. A randomly distribution of the receiver units 21 has shown to decrease the noise and, thus, to increase the signal to noise ratio of the signals received by the receiver units 21.

The receiver units 21 are connected with an evaluator 33 that receives in the shown embodiment electric signals representing the ultrasonic waves received by the receiver units 21.

The emitter unit 11 is moved by a emitter moving unit 12 along the longitudinal axis 31 to impinge the measuring object within the measuring area 30 with ultrasonic waves from different positions.

So, Fig. 3 shows an embodiment with various receiver units 21 fixed at different positions along the measuring area 30 and with an emitter unit 11 moveable relative to the measuring area 30 not according to the apparatus of claim 1.

The receiver units 21 receive ultrasonic waves at various positions after each emission of ultrasonic waves by the emitter unit 11 from different positions relative to the measuring area 30.

The measuring area 30 of Fig. 4 is given by a spheroid with a major axis - which is here also the longitudinal axis 31 and a minor axis. Spheroid with major and minor axis that is adequately selected to enclose the object to be contact-less scanned.

Some steps of the method to inspect an object are according to different embodiments as follows:
Step 1: Data acquisition

A single or a group of elementary transducers send ultrasonic waves. All elements of the enclosing array receive ultrasonic waves. A random and/or even distribution of transducers around the measuring area is used. In one embodiment, the position from which the ultrasound waves are emitted is changed after receiving the ultrasound waves modified by interaction with the measuring object.

Sequentially, the transducers or groups of elementary transducers emit an unfocused spherical wave, until the object is illuminated by ultrasound waves preferably from all directions. During each shot, the other transducers or groups of transducers receive the transmitted, scattered and reflected signals. Thus, the recorded signals yield a high level of redundancy. To capture at least reflected and transmitted waves simultaneously is possible by the measuring arrangement and the suggested aperture or arrangement of the emitter and receiver transducers around the measuring area. Additionally to this, the proposed system also allows just to consider reflected or transmitted waves.

Furthermore, different aspects should be considered into account for the data acquisition step:
- Interaction waves/propagation mediums: deep knowledge of the ultrasound physics as well as material characteristics (inhomogeneity, anisotropy) is required in order to comprehend what effect will occur within the material. As example, mode conversion can occur while the waves propagate through the material of the object. This effect can usually be neglected for analysis of soft tissue in medical field but can be important for material testing. Hence, it is taken into account.
- System aperture: the optimization of the system aperture plays a major role in getting an adequate quality of data. The necessary data are in one embodiment obtained by a simulation in order to find out how to spatially distribute the elementary transducers (randomly or with a distribution following a certain pattern) and how to trigger them individually or as groups.
- Electronically realization and affordability: As a large number of ultrasound transducers are needed, they have to be inexpensive to enable a low cost system.
- Data acquirement and data handling: High data rates are caused by the parallel use of hundreds (2D aperture) and thousands of transducers. A large amount of data in the magnitude of several Gigabytes has to be acquired and processed.

### Step 2: Data processing

The received signals are processed, i.e. filtered etc., to improve the signal to noise ratio and to increase signal fidelity (phase corrections).

### Step 3: Data reconstruction

As mode conversion can occur within the object, i.e. conversion of a longitudinal wave into transversal wave and vice-versa, the correct speed of sound (not the same for longitudinal and transversal waves inside a material) is used while reconstructing the reflected and transmitted waves. In an additionally embodiment, a material anisotropy and inhomogeneity of the measuring object is considered for the evaluation of the data. Here the elasticity coefficients per position inside the materials are used in one embodiment for estimating the speed of sound at the corresponding position.

With respect to the above mentioned details, the processed signals are reconstructed to an image of a specified modality. The reflected signals are separately reconstructed using state of the art reconstruction methods such as 3D-Synthetic Aperture Focusing Technique (SAFT) and/or iterative reconstruction techniques (Spares Recovery Spares Recovery, [14, 15]). Current SAFT techniques can only be applied to reconstruct standard known primitives such as cubes, cylinders etc. By capturing signals from all directions surrounding the object and by computing the speed of sound at all depths within the object etc., the proposed system allows the reconstruction of more complex shapes without necessary prior knowledge about the geometry of the object. Mode conversion, i.e. the conversion between longitudinal and transversal waves, is a factor to deal with in material diagnosis or material testing using ultrasound waves. Such effect can be ignored in medical diagnosis with ultrasound waves (such as for breast cancer [5]).

One way to deal with mode conversion in materials is the computation of a speed of sound map using transmitted waves. This delivers information about the speed of sound inside the object in all illumination directions and illumination depths. Such a map is in one embodiment incorporated in the reconstruction of the reflected waves using SAFT for instance.

The transmitted signals are reconstructed in one embodiment via adequate algorithms for through transmission such as Filtered Back Projection (FBP) or Iterative Reconstruction Techniques such as Algebraic Iterative Reconstruction Technique (ART). ART and FBP are well known techniques for X-ray CT. Hence, they represent a starting point to interpolate the attenuation coefficients within the material using ultrasound waves. However, the encountered difficulties when reconstructing transmitted ultrasound waves includes further challenging problems such as shadowing effects. Those occur when for a specific propagation angle of the wave, a strong reflector is encountered. The reflector blocks the waves from propagating beyond it, thus no transmitted wave is measured for the specific angle. However, with the help of the proposed aperture concept, the signals measured by the other transducers help into interpolating the attenuation coefficients for the shadow region. This is further emphasized, by using other incidence angles that illuminate the shadowed region because for instance, the total reflector is not encountered for these angles.

### Step 4: Data visualization

The Pulse/Echo reconstructed volume and the transmission based reconstruction volume are in one embodiment separately displayed as 3D computed tomography volumetric ultrasonic data. These volumes can be merged to be visualized as one synthesized volume, providing a more specific characterization.

Although some aspects have been described in the context of an apparatus, it is clear that these aspects also represent a description of the corresponding method. Analogously, aspects described in the context of a method step also represent a description of a corresponding block or item or feature of a corresponding apparatus.

### References:

[1] S. J. Norton and M. Linzer, Ultrasonic reflectivity tomography: Reconstruction with circular transducer arrays, Ultras. Imag., 1, pp. 154 - 184, 1979.
[2] J. F. Greenleaf and R. C. Bahn, Clinical imaging with transmissive ultrasonic computerized tomography., IEEE Trans. Biomed. Eng., 28, pp. 177 - 185, 1981.
[3] J. R. Jago and T. A. Wittingham, Experimental studies in transmission ultrasound computed tomography, Med. Phys. Biol., 36, pp. 1515 - 1527, 1991.
[4] M. Ashfaq and H. Ermert, A new approach towards ultrasonic transmission tomography with a standard ultrasound system, Proc. IEEE Ultrasonics Symp., pp. 1848 - 1851, 2004.
[5] N. V. Ruiter, G. F. Schwarzenberg, M. Zapf, R. Liu, R. Stotzka, and H. Gemmeke, "3D ultrasound computer tomography: Results with a clinical breast phantom," in 2006 IEEE Ultrasonics Symp., pp.989 - 992.
[6] N. Ouric, P. Littrup, L. Poulo, A. Babkin, R. Pevzner, E. Holsapple, O. Rama, and C. Glide, "Detection of breast cancer with ultrasound tomography: First results with the computed ultrasound risk evaluation (CURE) prototype," Med. Phys., vol. 34, no. 2, pp. 773 - 785, 2007.
[7] C. Li, N. Ouric, P. Littrup, and L. Huang, "In vivo breast soundspeed imaging with ultrasound tomography," Ultrasound Med. Biol., vol. 35, no. 10, pp. 1615 - 1628, 2009.
[8] J. Wiskin, O. Borup, S. Johnson, M. Berggren, O. Robinson, J. Smith, J. Chen, Y. Parisky, and J. Klock, "Inverse scattering and refraction corrected reflection for breast cancer imaging" Proc. SPIE, vol. 7629, no. 1, art. no. 76290K, 2010.
[9] M. P. Andre, H. S. Janee, P. J. Martin, G. P. Otto, B. A. Spivey, and O. A. Palmer, "Highspeed data acquisition in a diffraction tomography system employing large-scale toroidal arrays" Int. J. Imaging Syst. Technol., vol. 8, no. 1, pp. 137 - 147, 1997.
[10] C. Hansen, N. Huttebrauker, W. Wilkening, and H. Ermert, "A method to expedite data acquisition for multiple spatial-temporal analyses of tissue perfusion by contrasten-hanced ultrasound" IEEE Trans. Ultrason. Ferroelectr. Freq. Control, vol. 56, no. 3, pp. 507 - 519, 2009.
[11] S. Mensah, P. Lasaygues, E. Oebieu, and E. Franceschini, "ANAIS: An ultrasound mammograph," J. Acoust. Soc. Am., vol. 123, no. 5, p. 3002, 2008.
[12] H. Gemmeke and N. Ruiter, "3D ultrasound computer tomography for medical imaging" Nucl. Instrum. Methods Phys. Res., vol. 550, no. 2, pp. 1057 - 1065, 2007.
[13] H. Rieder, M. Spies, R. Licht, and P. Kreier, "Development and optimization of a rotating phased array inspection system", AIP Conference Proceedings 03/2003; 657(1):785 - 792.
[14] D. Needell, J. Tropp, COSAMP: Iterative Signal Recovery from Incomplete and Inaccurate sampling, ACM Technical Report 2008-01, California Institute of Technology, 2008.
[15] J. Tropp, A. Gilbert, Signal Recovery from Random Measurements Via Orthogonal Matching Pursuit, IEEE Transaction on Information Theory, vol. 55, pp.4655 - 4666, 2007.

## Claims

1. Apparatus (1) for inspecting an object (100) in the field of material testing, comprising:
an emitter (10) comprises a plurality of emitter units (11) configured for emitting ultrasound waves towards a measuring area (30) and
a receiver (20) comprises a plurality of receiver units (21) configured for receiving ultrasound waves from the measuring area (30),
wherein the emitter units (11) and the receiver units (21) are arranged relative to the measuring area (30) according to a specific geometrical pattern enclosing the measuring area (30),
wherein the plurality of emitter units (11) are configured to emit ultrasound waves from different positions relative to the measuring area (30), and wherein the plurality of receiver units (21) are configured to receive ultrasound waves at different positions relative to the measuring area (30), wherein at least some receiver units (21) at some of the different positions are configured to receive only transmitted ultrasound waves, and
an evaluator (33) configured to receive and evaluate signals from the receiver (20), wherein the signals from the receiver (20) are based on transmitted ultrasound waves received by the receiver (20).

2. Apparatus (1) of claim 1,
wherein the emitter units (11) are configured to emit unfocussed ultrasound waves towards the measuring area (30).

3. Apparatus (1) of claim 1 or 2,
wherein the emitter units (11) are configured to emit ultrasound waves at different times from different positions relative to the measuring area (30).

4. Apparatus (1) of any of claims 1 to 3,
wherein the emitter units (11) are configured to emit ultrasound waves simultaneously from different positions relative to the measuring area (30).

5. Apparatus (1) of any of claims 1 to 4,
wherein the emitter (10) comprises an emitter moving unit (12), and
wherein the emitter moving unit (12) is configured to move the emitter units (11) relative to the measuring area (30).

6. Apparatus (1) of any of claims 1 to 5,
wherein the evaluator (33) is configured to handle the case of missing transmitted ultrasound waves.

7. Apparatus (1) of any of claims 1 to 6,
wherein the receiver (20) comprises a receiver moving unit (22), and
wherein the receiver moving unit (22) is configured to move the receiver units (21) relative to the measuring area (30).

8. Apparatus (1) of any of claims 1 to 7,
wherein some receiver units (21) are configured to receive only diffracted ultrasound waves.

9. Apparatus (1) of any of claims 1 to 8,
wherein the measuring area (30) has at least at one height along a longitudinal axis (31) a circular circumference.

10. Apparatus (1) of claim 9,
wherein the emitter units (11) and the receiver units (21) are arranged relative to the measuring area (30) according to a circular or ring pattern.

11. Apparatus (1) of any of claims 1 to 10,
wherein the evaluator (33) is configured to evaluate a damping or attenuation of ultrasound waves due to an interaction with the object (100).

12. Apparatus (1) of any of claims 1 to 11, wherein the specific geometrical pattern is circular, rectangular, cubical, cylindrical, hemi-spherical or semispherical.

13. Apparatus (1) of any of claims 1 to 12,
wherein the signals from the receiver (20) are based on transmitted and diffracted ultrasound waves received by the receiver (20).

14. Method for inspecting an object (100) in the field of material testing,
comprising:
emitting ultrasonic waves towards a measuring area (30), and
receiving ultrasonic waves from the measuring area (30),
wherein the ultrasonic waves are emitted by an emitter comprising a plurality of emitter units at different positions relative to
the measuring area (30) according to a specific geometrical pattern enclosing the measuring area (30), and
wherein ultrasonic waves are received by a receiver comprising a plurality of receiver units at different positions relative to the
measuring area (30) according to a specific geometrical pattern enclosing the measuring area (30), and
wherein at some positions of the different positions receiving ultrasonic waves only transmitted ultrasonic waves are received, and evaluating the transmitted ultrasound waves received by the receiver (20).

15. Method of claim 14, further comprising:
receiving transmitted and diffracted ultrasonic waves from the measuring area (30),
wherein the ultrasonic waves are emitted from different positions relative to the measuring area (30), and
wherein the transmitted and diffracted ultrasonic waves are received at different positions relative to the measuring area (30), and
evaluating the transmitted and diffracted ultrasound waves received by the receiver (20).

## Patentansprüche

1. Vorrichtung (1) zum Untersuchen eines Objekts (100) auf dem Gebiet der Materialprüfung, die folgende Merkmale aufweist:
einen Emitter (10), der eine Mehrzahl von Emittereinheiten (11) aufweist, die zum Aussenden von Ultraschallwellen in Richtung eines Messbereichs (30) ausgebildet sind, und
einen Empfänger (20), der eine Mehrzahl von Empfängereinheiten (21) aufweist, die zum Empfangen von Ultraschallwellen von dem Messbereich (30) ausgebildet sind,
wobei die Emittereinheiten (11) und die Empfängereinheiten (21) relativ zu dem Messbereich (30) gemäß einem spezifischen geometrischen Muster angeordnet sind, das den Messbereich (30) umschließt,
wobei die Mehrzahl von Emittereinheiten (11) dazu ausgebildet ist, Ultraschallwellen von unterschiedlichen Positionen relativ zu dem Messbereich (30) auszusenden, und
wobei die Mehrzahl von Empfängereinheiten (21) dazu ausgebildet ist, Ultraschallwellen an unterschiedlichen Positionen relativ zu dem Messbereich (30) zu empfangen,
wobei zumindest einige Empfängereinheiten (21) an einigen der unterschiedlichen Positionen dazu ausgebildet sind, nur durchgelassene Ultraschallwellen zu empfangen, und
einen Auswerter (33), der dazu ausgebildet ist, Signale von dem Empfänger (20) zu empfangen und auszuwerten, wobei die Signale von dem Empfänger (20) auf durchgelassenen Ultraschallwellen basieren, die durch den Empfänger (20) empfangen werden.

2. Vorrichtung (1) gemäß Anspruch 1,
bei der die Emittereinheiten (11) dazu ausgebildet sind, unfokussierte Ultraschallwellen in Richtung des Messbereichs (30) auszusenden.

3. Vorrichtung (1) gemäß Anspruch 1 oder 2,
bei der die Emittereinheiten (11) dazu ausgebildet sind, Ultraschallwellen zu unterschiedlichen Zeiten von unterschiedlichen Positionen relativ zu dem Messbereich (30) auszusenden.

4. Vorrichtung (1) gemäß einem der Ansprüche 1 bis 3,
bei der die Emittereinheiten (11) dazu ausgebildet sind, Ultraschallwellen gleichzeitig von unterschiedlichen Positionen relativ zu dem Messbereich (30) auszusenden.

5. Vorrichtung (1) gemäß einem der Ansprüche 1 bis 4,
bei der der Emitter (10) eine Emitterbewegungseinheit (12) aufweist und
wobei die Emitterbewegungseinheit (12) dazu ausgebildet ist, die Emittereinheiten (11) relativ zu dem Messbereich (30) zu bewegen.

6. Vorrichtung (1) gemäß einem der Ansprüche 1 bis 5,
bei der der Auswerter (33) dazu ausgebildet ist, den Fall fehlender durchgelassener Ultraschallwellen zu handhaben.

7. Vorrichtung (1) gemäß einem der Ansprüche 1 bis 6,
bei der der Empfänger (20) eine Empfängerbewegungseinheit (22) aufweist und
wobei die Empfängerbewegungseinheit (22) dazu ausgebildet ist, die Empfängereinheiten (21) relativ zu dem Messbereich (30) zu bewegen.

8. Vorrichtung (1) gemäß einem der Ansprüche 1 bis 7,
bei der einige Empfängereinheiten (21) dazu ausgebildet sind, nur gebeugte Ultraschallwellen zu empfangen.

9. Vorrichtung (1) gemäß einem der Ansprüche 1 bis 8,
bei der der Messbereich (30) zumindest an einer Höhe entlang einer Längsachse (31) einen kreisförmigen Umfang aufweist.

10. Vorrichtung (1) gemäß Anspruch 9,
bei der die Emittereinheiten (11) und die Empfängereinheiten (21) relativ zu dem Messbereich (30) gemäß einem kreisförmigen oder Ringmuster angeordnet sind.

11. Vorrichtung (1) gemäß einem der Ansprüche 1 bis 10,
bei der der Auswerter (33) dazu ausgebildet ist, eine Dämpfung oder ein Abklingen von Ultraschallwellen aufgrund einer Wechselwirkung mit dem Objekt (100) auszuwerten.

12. Vorrichtung (1) gemäß einem der Ansprüche 1 bis 11, bei der das spezifische geometrische Muster kreisförmig, rechteckig, kubisch, zylindrisch, hemisphärisch oder halbkugelförmig ist.

13. Vorrichtung (1) gemäß einem der Ansprüche 1 bis 12,
bei der die Signale von dem Empfänger (20) auf durchgelassenen und gebeugten Ultraschallwellen, die durch den Empfänger (20) empfangen werden, basieren.

14. Verfahren zum Untersuchen eines Objekts (100) auf dem Gebiet der Materialprüfung, das folgende Schritte aufweist:
Aussenden von Ultraschallwellen in Richtung eines Messbereichs (30) und
Empfangen von Ultraschallwellen von dem Messbereich (30),
wobei die Ultraschallwellen durch einen Emitter, der eine Mehrzahl von Emittereinheiten aufweist, an unterschiedlichen Positionen relativ zu dem Messbereich (30) gemäß einem spezifischen geometrischen Muster ausgesendet werden, das den Messbereich (30) umschließt, und
wobei Ultraschallwellen durch einen Empfänger, der eine Mehrzahl von Empfängereinheiten aufweist, an unterschiedlichen Positionen relativ zu dem Messbereich (30) gemäß einem spezifischen geometrischen Muster empfangen werden, das den Messbereich (30) umschließt, und wobei an einigen Positionen der unterschiedlichen Positionen, die Ultraschallwellen empfangen, nur durchgelassene Ultraschallwellen empfangen werden, und
Auswerten der durchgelassenen Ultraschallwellen, die durch den Empfänger (20) empfangen werden.

15. Verfahren gemäß Anspruch 14, das ferner folgende Schritte aufweist:
Empfangen durchgelassener und gebeugter Ultraschallwellen von dem Messbereich (30),
wobei die Ultraschallwellen von unterschiedlichen Positionen relativ zu dem Messbereich (30) ausgesendet werden und
wobei die durchgelassenen und gebeugten Ultraschallwellen an unterschiedlichen Positionen relativ zu dem Messbereich (30) empfangen werden, und
Auswerten der durchgelassenen und gebeugten Ultraschallwellen, die durch den Empfänger (20) empfangen werden.

## Revendications

1. Appareil (1) pour inspecter un objet (100) dans le domaine de test de matériaux, comprenant:
un émetteur (10) qui comprend une pluralité d'unités émettrices (11) configurées pour émettre des ondes ultrasonores vers une zone de mesure (30), et
un récepteur (20) qui comprend une pluralité d'unités réceptrices (21) configurées pour recevoir les ondes ultrasonores de la zone de mesure (30),
dans lequel les unités émettrices (11) et les unités réceptrices (21) sont disposées par rapport à la zone de mesure (30) selon un modèle géométrique spécifique entourant la zone de mesure (30),
dans lequel la pluralité d'unités émettrices (11) sont configurées pour émettre des ondes ultrasonores à partir de différentes positions par rapport à la zone de mesure (30), et dans lequel la pluralité d'unités réceptrices (21) sont configurées pour recevoir les ondes ultrasonores à différentes positions par rapport à la zone de mesure (30), dans lequel au moins certaines unités réceptrices (21) à certaines des différentes positions sont configurées pour recevoir uniquement les ondes ultrasonores transmises, et
un évaluateur (33) configuré pour recevoir et évaluer les signaux du récepteur (20), où les signaux du récepteur (20) sont basés sur les ondes ultrasonores transmises reçues par le récepteur (20).

2. Appareil (1) selon la revendication 1,
dans lequel les unités émettrices (11) sont configurées pour émettre des ondes ultrasonores non focalisées vers la zone de mesure (30).

3. Appareil (1) selon la revendication 1 ou 2,
dans lequel les unités émettrices (11) sont configurées pour émettre des ondes ultrasonores à différents moments à partir de différentes positions par rapport à la zone de mesure (30).

4. Appareil (1) selon l'une quelconque des revendications 1 à 3, dans lequel les unités émettrices (11) sont configurées pour émettre des ondes ultrasonores simultanément à partir de différentes positions par rapport à la zone de mesure (30).

5. Appareil (1) selon l'une quelconque des revendications 1 à 4,
dans lequel l'émetteur (10) comprend une unité de déplacement d'émetteurs (12), et
dans lequel l'unité de déplacement d'émetteurs (12) est configurée pour déplacer les unités d'émetteurs (11) par rapport à la zone de mesure (30).

6. Appareil (1) selon l'une quelconque des revendications 1 à 5, dans lequel l'évaluateur (33) est configuré pour traiter le cas d'ondes ultrasonores transmises manquantes.

7. Appareil (1) selon l'une quelconque des revendications 1 à 6,
dans lequel le récepteur (20) comprend une unité de déplacement de récepteurs (22), et
dans lequel l'unité de déplacement de récepteurs (22) est configurée pour déplacer les unités réceptrices (21) par rapport à la zone de mesure (30).

8. Appareil (1) selon l'une quelconque des revendications 1 à 7, dans lequel certaines unités réceptrices (21) sont configurées pour recevoir uniquement les ondes ultrasonores diffractées.

9. Appareil (1) selon l'une quelconque des revendications 1 à 8, dans lequel la zone de mesure (30) présente au moins, à une hauteur le long d'un axe longitudinal (31), une circonférence circulaire.

10. Appareil (1) selon la revendication 9,
dans lequel les unités émettrices (11) et les unités réceptrices (21) sont disposées par rapport à la zone de mesure (30) selon un modèle circulaire ou annulaire.

11. Appareil (1) selon l'une quelconque des revendications 1 à 10, dans lequel l'évaluateur (33) est configuré pour évaluer un amortissement ou une atténuation des ondes ultrasonores du(e) à une interaction avec l'objet (100).

12. Appareil (1) selon l'une quelconque des revendications 1 à 11, dans lequel le modèle géométrique spécifique est circulaire, rectangulaire, cubique, cylindrique, hémisphérique ou semisphérique.

13. Appareil (1) selon l'une quelconque des revendications 1 à 12, dans lequel les signaux du récepteur (20) sont basés sur les ondes ultrasonores transmises et diffractées reçues par le récepteur (20).

14. Procédé d'inspection d'un objet (100) dans le domaine de test de matériaux,
comprenant le fait de:
émettre des ondes ultrasonores vers une zone de mesure (30), et
recevoir les ondes ultrasonores de la zone de mesure (30),
dans lequel les ondes ultrasonores sont émises par un émetteur comprenant une pluralité d'unités émettrices à différentes positions par rapport à la zone de mesure (30) selon un modèle géométrique spécifique entourant la zone de mesure (30),
et
dans lequel les ondes ultrasonores sont reçues par un récepteur comprenant une pluralité d'unités réceptrices à différentes positions par rapport à la zone de mesure (30) selon un modèle géométrique spécifique entourant la zone de mesure (30),
et
dans lequel à certaines positions des différentes positions de réception des ondes ultrasonores ne sont reçues que les ondes ultrasonores transmises, et
évaluer les ondes ultrasonores transmises reçues par le récepteur (20).

15. Procédé selon la revendication 14, comprenant par ailleurs le fait de:
recevoir les ondes ultrasonores transmises et diffractées de la zone de mesure (30),
dans lequel les ondes ultrasonores sont émises à partir de différentes positions par rapport à la zone de mesure (30), et
dans lequel les ondes ultrasonores transmises et diffractées sont reçues à différentes positions par rapport à la zone de mesure (30), et
évaluer les ondes ultrasonores transmises et diffractées reçues par le récepteur (20).
